# EUROPEAN PATENT SPECIFICATION

(11) **EP 2 046 562 B1**
(45) Date of publication and mention of the grant of the patent: **06.10.2010**
(21) Application number: 07747481.5
(22) Date of filing: 01.06.2007
(51) Int. Cl.: B29C 67/00

(54) **METHOD AND SYSTEM FOR LAYERWISE PRODUCTION OF A TANGIBLE OBJECT**
VERFAHREN UND SYSTEM ZUR SCHICHTWEISEN HERSTELLUNG EINES KONKRETEN OBJEKTS
PROCÉDÉ ET SYSTÈME DE FABRICATION PAR COUCHES D'UN OBJET TANGIBLE

(30) Priority: 18.07.2006 EP 06076434
(43) Date of publication of application: 15.04.2009
(73) Proprietor: Nederlandse Organisatie voor Toegepast -Natuurwetenschappelijk Onderzoek TNO, 2628 VK Delft (NL)
(72) Inventor: BOOT, Ronaldus, Jacobus, Johannes, 5691 AZ Son En Breugel (NL); MAALDERINK, Herman, Hendrikus, 5673 LH Nuenen (NL); JAMAR, Jacobus, Hubertus, Theodoor, 5512 BN Vessem (NL)
(74) Representative: Hatzmann, Martin
(86) International application number: PCT/NL2007/050258
(87) International publication number: WO 2008/010708

(56) References cited:
- EP-A1- 0 484 086
- DE-A1- 10 256 672

## Description

### FIELD AND BACKGROUND OF THE INVENTION

The invention relates to a method for layerwise production of a tangible object according to the preamble of claim 1. The invention also relates to a system for layerwise production of a tangible object.

Such a method is known. For example it is known from DE10256672A1 which discloses the preambles of claims 1 and 9 respectively that the liquid reservoir has a transparent bottom plate whose upper side has a separation layer. In the space above the bottom plate there is a carrier plate which can be moved up and down. During its movement, the carrier plate can reach positions ranging from under the liquid level to above it. A firstly formed solid layer of the tangible object is adhered to the underside of the carrier plate by selectively solidifying the liquid. Consecutively formed solid layers are each adhered to a previously formed solid layer, respectively.

Each time after solidification of a new layer, the carrier plate together with the earlier solidified layers adhered thereon are moved upwards in order to separate the last formed solid layer from the separation layer of the bottom plate. Each time after such separation, the separated solid layer is moved to a predetermined position at a distance from the separation layer of the bottom plate for letting the liquid flow-in between the separated solid layer and the separation layer of the bottom plate. By solidifying a predetermined area of a layer containing the flown-in liquid, a successive solid layer of the tangible object is obtained.

A drawback of the known method is, that during each method cycle the time required for said separation and for the liquid to flow-in between the separated solid layer and the separation layer of the bottom plate is relatively long. This restricts the speed of the production process.

Note that this restriction in production speed is especially severe for objects having strongly varying cross-sections. This is explained as follows. The upward separation movement of the carrier plate requires an external force to be exerted on the carrier plate. This external force results in an increase of internal stresses in the tangible object being produced. If these stresses become too high, the object can deform, deteriorate or break. Hence, for the known method, the maximum permissible internal stress level in the tangible object restricts the maximum permissible level of external forces to be applied, and hence restricts the production speed. Since vertical tensile stresses in objects with varying cross-sections can become locally very high, the restriction in production speed is especially severe for such objects.

### SUMMARY OF THE INVENTION

It is an object of the invention to enable a faster production of a tangible object.

Therefore, according to a first aspect of the invention, a method according to claim 1 is provided.

In this method according to the first aspect of the invention, for at least one of said method cycles, said solidifying and said separating are carried out such that solidifying of certain parts of the layer takes place simultaneously with separating of other, already solidified parts of the layer. Favourable effects of such simultaneous solidifying and separating are elucidated as follows.

At first, the simultaneous solidifying and separating provides a speed gain of the process in itself. That is, the start of separating a layer does not have to wait until all parts of the layer have been solidified. Hence, there is little or no downtime of the separating means. Also, there is little or no downtime of the solidifying means.

Secondly, the separating of the layer is carried out more gradually in that it is performed part by part, instead of the whole layer at once. This means that, as compared to known methods, external forces to be exerted for the separation movement, and therefore the internal stresses in the tangible object, do not need to be that high anymore for a given separation speed. In fact, such external forces can be increased relative to known methods, without violating a maximum permissible internal stress level in the tangible object. In this respect, a further gain in production speed can be obtained.

Furthermore, according to a second aspect of the invention, a system according to claim 9 is provided.

Specific embodiments of the invention are set forth in the dependent claims.

These and other aspects of the invention will be apparent from and elucidated with reference to the embodiments described hereinafter.

### BRIEF DESCRIPTION OF THE DRAWINGS

Further details, aspects and embodiments of the invention will be described, by way of example only, with reference to the drawings.
Fig. 1 schematically shows a sectional side view of an example of an embodiment of a system according to the invention.
Fig. 2 schematically shows a sectional side view of an example of another embodiment of a system according to the invention.
Fig. 3 schematically shows a sectional side view of an example of yet another embodiment of a system according to the invention.
Figs. 4A and 4B schematically show a fragmentary sectional side view of an example of yet another embodiment of a system according to the invention.
Figs. 5A and 5B schematically show a fragmentary sectional side view of an example of yet another embodiment of a system according to the invention.

### DETAILED DESCRIPTION

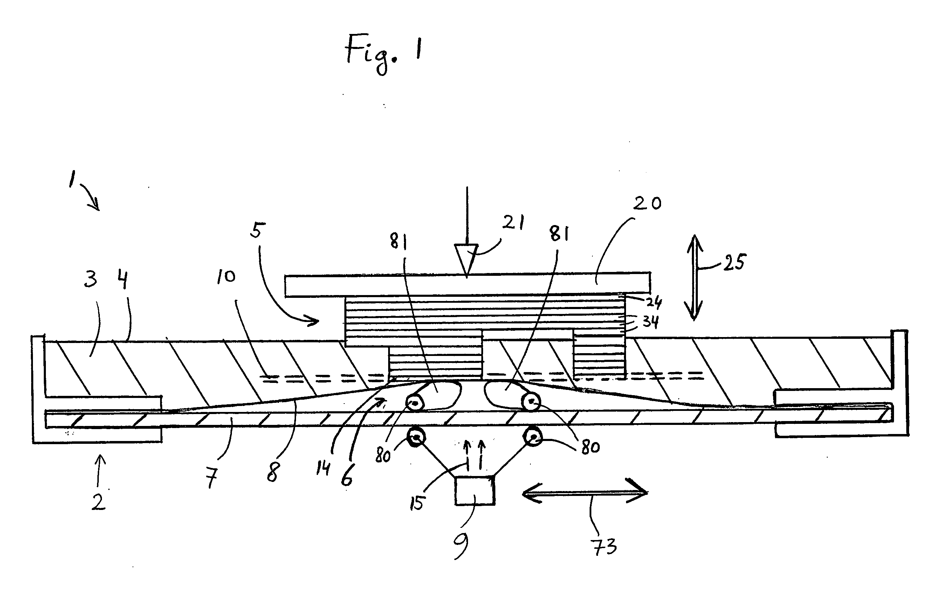

Each of the examples of Figs. 1-5 relates to a system according to claim 9 that can perform an example of a method according to claim 1. In the respective figures sometimes the same reference signs are used for similar or identical parts or aspects of the systems.

Hence, each of the examples of Figs. 1-5 relates to a system for layerwise production of a tangible object, the system comprising:
a liquid reservoir for containing a liquid therein;
a construction shape for being in contact with the liquid in the liquid reservoir;
solidifying means for solidifying a predetermined area of a layer of the liquid, said liquid layer adjoining the construction shape, so as to obtain a solid layer of the tangible object, the solid layer thus having a predetermined shape;
separating means for separating said solid layer from said construction shape;
moving means for moving, relative to one another, the separated solid layer and the construction shape to a predetermined position relative to one another for similar solidifying a predetermined area of a successive such liquid layer containing liquid flown-in between the separated solid layer and the construction shape, so as to obtain a successive such solid layer adhered to the solid layer;
wherein the system is arranged for carrying out said solidifying and said separating such that solidifying of certain parts of the layer takes place simultaneously with separating of other, already solidified parts of the layer.

In each of the examples of Figs. 1-5 the tangible object is shown while being produced. It may for example be a prototype or model of an article of manufacture or other suitable type of object.

In each of the examples of Figs. 1-5 the solidifying means can use any suitable chemical or physical process to solidify the predetermined area of the liquid layer. The solidifying means may for example initiate a chemical reaction of a component in the liquid which results in a solid reaction product. For example, the liquid may be a liquid resin which can be cured by electro-magnetic radiation, for example a photo-polymer of which polymerisation can be activated by projecting light of a suitable wavelength. The liquid can be transformed into a solid by a suitable type of energy and the solidifying means may include a source of energy which can selectively provide the energy to the predetermined area. The source of energy may for example include a source of electro-magnetic radiation. The solidifying means may include a light source which can emit light which is projected onto the predetermined area of the liquid layer via a projection unit of the solidifying means in a pattern corresponding to the desired shape and size of the solid layer.

In each of the examples of Figs. 1, 2 and 3 the construction shape comprises a flexible layer having a liquid contacting side for being in contact with the liquid in the liquid reservoir, and the construction shape is arranged for bending, in operation, the flexible layer such that time-dependently varying contacting parts of the liquid contacting side of the flexible layer are in contact with the liquid layer for solidifying said certain parts of the layer, while time-dependently varying other parts of the liquid contacting side of the flexible layer have been separated from said other, already solidified parts of the layer.

Such application of such flexible layer can easily and effectively be incorporated in many different methods and systems for layerwise production of tangible objects.

Furthermore, in each of the examples of Figs. 1, 2 and 3, the construction shape comprises guiding means arranged for being in pressing contact with a side of the flexible layer opposite to the liquid contacting side for defining the time-dependently varying contacting parts of the liquid contacting side of the flexible layer.

Such application of such guiding means is an easy and effective way of carrying out the bending of the flexible layer.

In the example of Fig. 1, the guiding means is arranged for realizing said pressing contact by means of sliding of the guiding means along said opposite side of the flexible layer.

Such sliding contact allows for a large area of said pressing contact, which is for example favourable for keeping the time-dependently varying contacting parts of the liquid contacting side of the flexible layer flat in conditions when the liquid in the reservoir would exert relatively large pressure on these contacting parts.

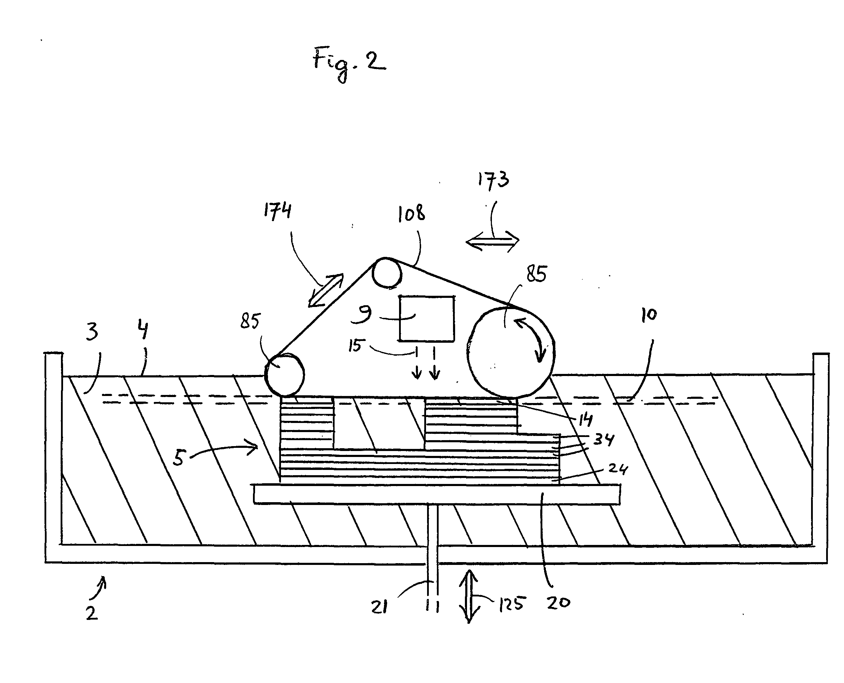

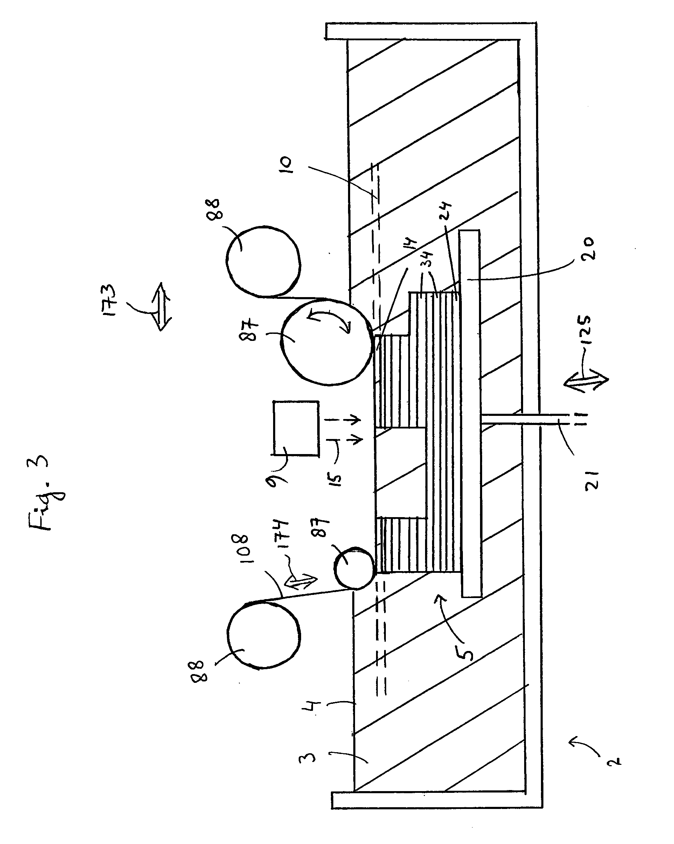

In the examples of Figs. 2 and 3, the guiding means is arranged for realizing said pressing contact by means of rolling of the guiding means along said opposite side of the flexible layer.

Such rolling contact reduces the wear of the flexible layer.

In the example of Fig. 2, said rolling of the guiding means is realized at least in that the flexible layer is rollable in a closed loop around at least two rollers.

This allows for a compact way of realizing the construction shape with rolling guiding means.

In the example of Fig. 3, said rolling of the guiding means is realized at least by means of a winding and rewinding mechanism for the flexible layer.

This allows for an alternative way of realizing the construction shape with rolling guiding means.

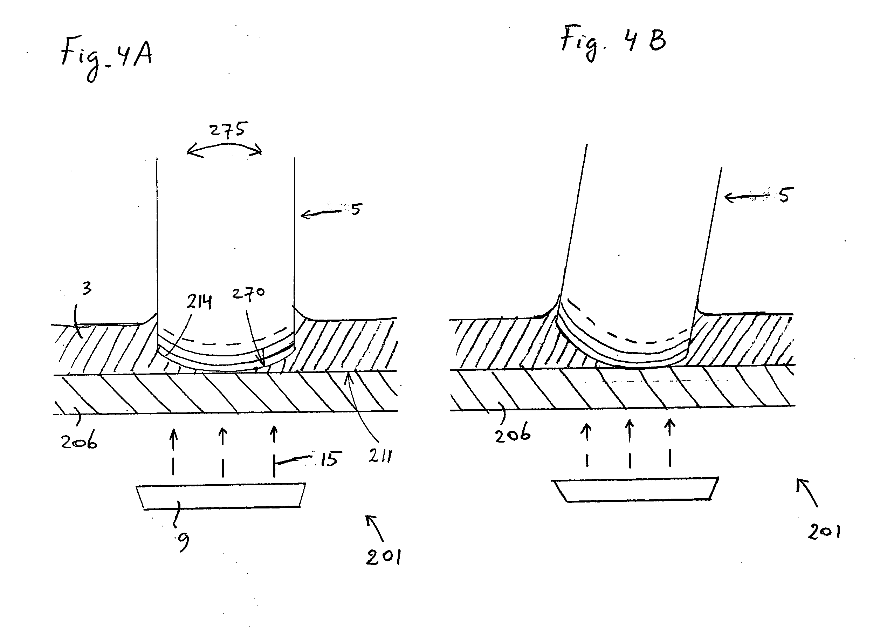

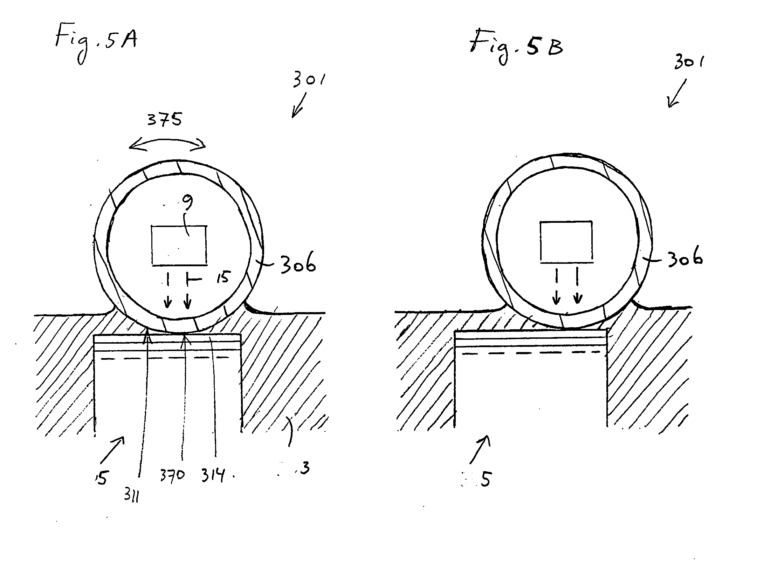

In the examples of Figs. 4A, 4B, 5A and 5B, said simultaneous taking place of solidifying and of separating is realized in another way than in the examples shown in Figs. 1, 2 and 3. More in particular, for the embodiments of Figs. 4A, 4B, 5A and 5B, said simultaneous taking place of solidifying and of separating is realized in that a relative rotative movement is performed between the construction shape and the object under construction.

Reference is now made to Fig. 1, which shows a system 1 according to the invention.

The system 1 comprises a liquid reservoir 2 which, in the shown example, is filled with a liquid 3 upto a liquid level 4. The system 1 further comprises a construction shape 6 which is positioned below the liquid level 4 in the liquid reservoir 2. In the shown example the reservoir 2 comprises a bottom platform 7 and the construction shape 6 comprises, located above platform 7, a flexible layer 8.

The system 1 further comprises solidifying means 9 for solidifying a predetermined area of a layer 10 of the liquid 3, said liquid layer 10 adjoining the construction shape 6, so as to obtain a solid layer 14 of the tangible object 5, the solid layer thus having a predetermined shape.

In the shown example, the solidifying means 9 is situated below the bottom platform 7. To enable the light or other radiation 15 of the solidifying means 9 to enter the liquid reservoir 2, the bottom platform 7 and the flexible layer 8 of the construction shape 6 are transparent to the radiation 15.

As will be explained somewhat further below, the system 1 further comprises separating means for separating said solid layer 14 from said construction shape 6.

The system 1 further comprises moving means for moving, relative to one another, the separated solid layer 14 and the construction shape 6 to a predetermined position relative to one another for similar solidifying a predetermined area of a successive such liquid layer containing liquid 3 flown-inbetween the separated solid layer 14 and the construction shape 6, so as to obtain a successive such solid layer adhered to the solid layer 14.

In the shown example, the moving means comprises a carrier plate 20 located above the construction shape 6. As indicated by double-arrow 25 in Fig. 1, the carrier plate 20 is movable up and down relative to the construction shape 6 by the action of a carrier plate actuator 21. During its movement, the carrier plate 20 can reach positions ranging from under the liquid level 4 to above it. A firstly formed solid layer 24 of the tangible object 5 is adhered to the underside of the carrier plate 20. Consecutively formed solid layers 34 are each adhered to a previously formed solid layer, respectively.

Each time after solidification and separation of a new layer, the carrier plate together with the solidified layers adhered thereon are moved upwards. Hence, the method for layerwise production of a tangible object is a cyclic method, wherein the described steps of solidifying, separating and positioning together are comprised in a single cycle of the method.

The system is arranged for carrying out said solidifying and said separating such that solidifying of certain parts of the layer takes place simultaneously with separating of other, already solidified parts of the layer. This is explained as follows.

The separating means for separating said layer 14 from said construction shape 6 simultaneously with the solidifying of a predetermined area of the layer 14 is explained as follows.

The flexible layer 8 has a liquid contacting side for being in contact with the liquid 3. Inbetween the flexible layer 8 on the one hand and the bottom platform 7 on the other hand, there is situated a guiding means 81 of the construction shape 6. Upper parts in Fig. 1 of the guiding means 81 are in pressing contact with a side of the flexible layer opposite to the liquid contacting side. In the shown example, said pressing contact is realized by means of sliding of the guiding means along said opposite side of the flexible layer. Lower parts in Fig. 1 of the guiding means 81 are in rolling contact with a side of the bottom platform 7 by means of rollers 80. In the shown example, on the opposite side of the platform 7 also the solidifying means 9 are in rolling contact with the platform 7 via similar such rollers 80. Both the guiding means 81 and the solidifying means 9 are synchronously movable relative to the platform 7 via these rollers 80 in either or both directions indicated by double arrow 73 in Fig. 1.

In the shown example, the platform 7 is transparent to the radiation 15, while the guiding means 81 contains a passageway for the radiation 15. Alternatively, the guiding means 81 can also be transparent to the radiation 15 instead of having a passageway therefor.

As an example it is now assumed that, in the course of time during the performing of a method cycle, the guiding means 81 and the solidifying means 9 are synchronously moving in the right-hand direction of arrow 73 in Fig. 1. Then, at the instantaneous moment in time shown in Fig. 1, there are contacting parts of the liquid contacting side of the flexible layer 8 which are in contact with the layer 10 for solidifying certain parts of the layer 10. During the movement of the guiding means 81 and the solidifying means 9, these contacting parts are time-dependently varying. In Fig. 1 on the left-hand side of these contacting parts there are time-dependently varying other parts of the liquid contacting side of the flexible layer 8 which have been separated from said other, already solidified parts of the layer 10. The liquid 3 is able to flow inbetween said other parts of the liquid contacting side of the flexible layer 8 and said other, already solidified parts of the layer 10. This is possible because the flexible layer 8 is bended by the movement of the guiding means 81 in the direction 73.

Reference is now made to Figs. 2 and 3 which show examples of other embodiments of a system for layerwise production of a tangible object 5.

A difference with the embodiment of Fig. 1 is that for the embodiments of Figs. 2 and 3 an upper layer 14, instead of a lower layer 14, of an object 5 under production is solidified during each method cycle. The carrier plate 20 is situated under the object under production, instead of above it, while the solidifying means 9 is situated above the object under production, instead of under it. In Figs. 2 and 3 the carrier plate 20 is movable up and down in directions 125 by the action of an actuator 21 which extends through the bottom of the liquid reservoir 2 of the system. It is remarked that it is not essential that the actuator extends through a bottom of the liquid reservoir. Instead, different other types of actuators are possible, for example an actuator extending from the carrier plate in upwards direction until above the liquid level 4.

In the examples of Figs. 2 and 3 the flexible layer is indicated by reference numeral 108.

A further difference with the embodiment of Fig. 1 is that for the embodiments of Figs. 2 and 3 a different guiding means is applied. That is, the guiding means in Figs. 2 and 3 comprises rollers 85 for realizing said pressing contact by means of rolling (instead of sliding) of the guiding means along said opposite side of the flexible layer 108.

A difference between the examples of Figs. 2 and 3 is that for the example of Fig. 2 said rolling of the guiding means is realized at least in that the flexible layer 108 is rollable in a closed loop around at least two rollers 85, while for the example of Fig. 3 said rolling of the guiding means is realized at least by means of a winding and rewinding mechanism for the flexible layer 108. The winding and rewinding mechanism of Fig. 3 comprises two winding and rewinding rollers 88.

For the embodiments of Figs. 2 and 3, the assembly comprising the flexible layer 108, the rollers and the solidifying means are synchronously movable relative to the reservoir 2 in either or both directions indicated by double arrow 173. The necessary driving means for such movement are not shown in the drawings. During such movement the flexible layer 108 is moving in one of the directions indicated by double arrow 174, such that the parts of the flexible layer 108 that are in contact with the layer 10 are not moving relative to the layer 10.

Note, that in the example of Fig. 1 the sliding of the guiding means along said opposite side of the flexible layer is applied for a system in which a lower layer 14 of an object 5 under production is solidified during each method cycle, while in the examples of Figs. 2 and 3 the rolling of the guiding means along said opposite side of the flexible layer is applied for a system in which an upper layer 14 of an object 5 under production is solidified during each method cycle. However, it is remarked that the vice versa situation is also possible. That is, it is also possible to apply rolling of the guiding means for a system in which a lower layer of an object under production is solidified during each method cycle, while it is also possible to apply sliding of the guiding means for a system in which an upper layer of an object under production is solidified during each method cycle.

Reference is now made to Figs. 4A and 4B. These figures show a fragment of a system 201 for layerwise production of a tangible object 5. The system 201 comprises: a construction shape 206 having a liquid contacting side 211 for being in contact with liquid 3 in a liquid reservoir of the system 201, as well as solidifying means 9 for emitting radiation 15. Reference numeral 214 denotes the last formed solid layer of the object 5. The construction shape 206 and the solid layer 214 have nonmatching shapes. In the embodiment shown in Figs. 4A and 4B said nonmatching shapes are realized in that the solid layer side 214 has a non-flat shape.

The solidification that the solid layer 214 has undergone, has been carried out by moving the object 5 relative to the construction shape 206 in a kind of rotative manner indicated by double arrow 275. To further illustrate this, Fig. 4B shows a condition during said rotative movement, in which condition the object 5 has an orientation relative to the construction shape 206, which orientation differs from that of Fig. 4A. In the course of time during such rotation, different parts of the liquid 3 between the solid layer side 270 and the contacting side 211 are being solidified by exposing these parts to the radiation 15. In this way the solid layer 214 has been formed in the course of time.

For this embodiment, the application of the said nonmatching shapes results in improved separation, since the liquid 3 will quickly fill up the expanding interspace between the solid layer 214 and the construction shape 206.

Reference is now made to Figs. 5A and 5B. These figures show a fragment of a system 301 for layerwise production of a tangible object 5. The system 301 comprises: a construction shape 306 having a liquid contacting side 311 for being in contact with liquid 3 in a liquid reservoir of the system 301, as well as solidifying means 9 for emitting radiation 15. Reference numeral 314 denotes the last formed solid layer of the object 5. The construction shape 306 and the solid layer 314 have nonmatching shapes. In the embodiment shown in Figs. 5A and 5B said nonmatching shapes are realized in that the liquid contacting side 311 has a non-flat shape.

The solidification that the solid layer 314 has undergone, has been carried out by moving the construction shape 306 relative to the object 5 in a kind of rotative manner indicated by double arrow 375. To further illustrate this, Fig. 5B shows a condition during said rotative movement, in which condition the object 5 has an orientation relative to the construction shape 306, which orientation differs from that of Fig. 5A. In the course of time during such rotation, different parts of the liquid 3 between the solid layer side 370 and the contacting side 311 are being solidified by exposing these parts to the radiation 15. In this way the solid layer 314 has been formed in the course of time.

Again, also for this embodiment, the application of the said nonmatching shapes results in improved separation, since the liquid 3 will quickly fill up the expanding interspace between the solid layer 314 and the construction shape 306.

In the foregoing specification, the invention has been described with reference to specific examples of embodiments of the invention. It will, however, be evident that various modifications and changes may be made therein without departing from the broader scope of the invention as set forth in the appended claims. For example, the liquid reservoir may be higher or lower than shown in the fig.1. Furthermore, the object may have any suitable size and shape. Also, the invention is not limited to physical devices or units implemented in non-programmable hardware but can also be applied in programmable devices or units able to perform the desired device functions by operating in accordance with suitable program code. Furthermore, the devices may be physically distributed over a number of apparatuses, while functionally operating as a single device. Also, devices functionally forming separate devices may be integrated in a single physical device. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. A method for layerwise production of a tangible object (5), the method comprising:
providing a liquid reservoir (2) containing a liquid (3);
providing a construction shape (6; 206; 306); and
repeatedly performing method cycles, each method cycle comprising the steps of:
- solidifying a predetermined area of a layer (10) of the liquid (3) when said liquid layer (10) is adjoining the construction shape, so as to obtain a solid layer (14; 214; 314) of the tangible object (5), the solid layer thus having a predetermined shape;
- separating said solid layer from said construction shape; and
- moving, relative to one another, the separated solid layer and the construction shape to a predetermined position relative to one another for carrying out a successive such method cycle for similar solidifying a predetermined area of a successive such liquid layer containing liquid (3) flown-in between the separated solid layer (14; 214; 314) and the construction shape (6; 206; 306), so as to obtain a successive such solid layer adhered to the solid layer;
**characterized in that**
for at least one of said method cycles, said solidifying and said separating are carried out such that solidifying of certain parts of the layer (14; 214; 314) takes place simultaneously with separating of other, already solidified parts of the layer.

2. A method according to claim 1, wherein the construction shape comprises a flexible layer (8; 108) having a liquid contacting side and wherein said simultaneous taking place of solidifying and of separating is realized in that said liquid contacting side is brought in contact with the liquid (3) in the liquid reservoir (2) and the flexible layer is bent such that time-dependently varying contacting parts of the liquid contacting side of the flexible layer (8; 108) are in contact with the liquid layer (10) for solidifying said certain parts of the layer (10), while time-dependently varying other parts of the liquid contacting side of the flexible layer (8; 108) have been separated from said other, already solidified parts of the layer (10).

3. A method according to claim 2, wherein the construction shape (6) comprises guiding means (81; 85; 87) and wherein the guiding means are brought in pressing contact with the side of the flexible layer (8; 108) opposite to the liquid contacting side for defining the time-dependently varying contacting parts of the liquid contacting side of the flexible layer.

4. A method according to claim 3, wherein said pressing contact is realized by means of sliding of the guiding means (81) along said opposite side of the flexible layer (8).

5. A method according to claim 3, wherein said pressing contact is realized by means of rolling of the guiding means (85; 87) along said opposite side of the flexible layer (108).

6. A method according to claim 5, wherein said rolling of the guiding means (85) is realized at least in that the flexible layer (108) is rolling in a closed loop around at least two rollers (85).

7. A method according to claim 5, wherein said rolling of the guiding means (87) is realized at least in that the flexible layer (108) is winded and rewinded by means of a winding and rewinding mechanism (88).

8. A method according to claim 1, wherein said simultaneous taking place of solidifying and of separating is realized in that a relative rotative movement is performed between the construction shape (206; 306) and the object (5) under construction.

9. A system for layerwise production of a tangible object (5), the system comprising:
a liquid reservoir (2) for containing a liquid (3) therein;
a construction shape (6; 206; 306) for being in contact with the liquid in the liquid reservoir;
solidifying means (9) for solidifying a predetermined area of a layer (10) of the liquid (3), said liquid layer (10) adjoining the construction shape, so as to obtain a solid layer (14; 214; 314) of the tangible object (5), the solid layer thus having a predetermined shape;
separating means (8, 80, 81; 108, 85; 108, 87; 275; 375) for separating said solid layer from said construction shape;
moving means (21) for moving, relative to one another, the separated solid layer and the construction shape to a predetermined position relative to one another for similar solidifying a predetermined area of a successive such liquid layer containing liquid (3) flown-in between the separated solid layer (14; 214; 314) and the construction shape (6; 206; 306), so as to obtain a successive such solid layer adhered to the solid layer;
**characterized in that**
the system is arranged for carrying out said solidifying and said separating such that solidifying of certain parts of the layer (14; 214; 314) takes place simultaneously with separating of other, already solidified parts of the layer.

10. A system according to claim 9, wherein the construction shape comprises a flexible layer (8; 108) having a liquid contacting side for being in contact with the liquid (3) in the liquid reservoir (2) and wherein the construction shape (6) is arranged for bending, in operation, the flexible layer such that time-dependently varying contacting parts of the liquid contacting side of the flexible layer (8; 108) are in contact with the liquid layer (10) for solidifying said certain parts of the layer (10), while time-dependently varying other parts of the liquid contacting side of the flexible layer (8; 108) have been separated from said other, already solidified parts of the layer (10).

11. A system according to claim 10, wherein the construction shape (6) comprises guiding means (81; 85; 87) arranged for being in pressing contact with a side of the flexible layer (8; 108) opposite to the liquid contacting side for defining the time-dependently varying contacting parts of the liquid contacting side of the flexible layer.

12. A system according to claim 11, wherein the guiding means is arranged for realizing said pressing contact by means of sliding of the guiding means (81) along said opposite side of the flexible layer (8).

13. A system according to claim 11, wherein the guiding means is arranged for realizing said pressing contact by means of rolling of the guiding means (85; 87) along said opposite side of the flexible layer (108).

14. A system according to claim 13, wherein said rolling of the guiding means (85) is realized at least in that the flexible layer (108) is rollable in a closed loop around at least two rollers (85).

15. A system according to claim 13, wherein said rolling of the guiding means (87) is realized at least by means of a winding and rewinding mechanism (88) for the flexible layer (108).

## Patentansprüche

1. Verfahren zur lagenweisen Herstellung eines konkreten Objekts (5), wobei das Verfahren umfasst:
Bereitstellen eines Flüssigkeitsbehälters (2), der eine Flüssigkeit (3) enthält;
Bereitstellen einer Konstruktionsform (6; 206; 306); und
wiederholtes Durchführen von Verfahrenszyklen, wobei jeder Verfahrenszyklus die Schritte beinhaltet:
- Verfestigen eines vorbestimmten Gebiets von einer Schicht (10) der Flüssigkeit (3), wenn die Flüssigkeitsschicht (10) an die Konstruktionsform angrenzt, um so eine feste Schicht (14; 214; 314) des konkreten Objekts (5) zu erhalten, wobei die feste Schicht **dadurch** eine vorbestimmte Form hat;
- Trennen der festen Schicht von der Konstruktionsform; und
- Bewegen der getrennten festen Schicht und der Konstruktionsform relativ zueinander in eine vorbestimmte Position relativ zueinander, um einen nachfolgenden solchen Verfahrenzyklus durchzuführen, um auf ähnliche Weise ein vorbestimmtes Gebiet von einer nachfolgenden solchen Flüssigkeitsschicht zu verfestigen, die Flüssigkeit (3) enthält, die zwischen die getrennte feste Schicht (14; 214; 314) und die Konstruktionsform (6; 206; 306) einströmt, um so eine nachfolgende solche feste Schicht zu erhalten, die an der festen Schicht anhaftet; **dadurch gekennzeichnet, dass**
bei mindestens einem der Verfahrenszyklen das Verfestigen und das Trennen so durchgeführt werden, dass das Verfestigen bestimmter Teile der.Schicht (14; 214; 314) gleichzeitig mit dem Trennen von anderen, bereits verfestigten Teilen der Schicht stattfindet.

2. Verfahren nach Anspruch 1, bei dem die Konstruktionsform eine flexible Schicht (8; 108) mit einer Flüssigkeitskontaktseite aufweist und bei dem das gleichzeitige Stattfinden des Verfestigens und des Trennens realisiert wird, indem die Flüssigkeitskontaktseite mit der Flüssigkeit (3) in dem Flüssigkeitsbehälter (2) in Kontakt gebracht und die flexible Schicht so gebogen wird, dass zeitabhängig variierende Kontaktteile der Flüssigkeitskontaktseite der flexiblen Schicht (8; 108) mit der Flüssigkeitsschicht (10) in Kontakt gebracht werden, um die bestimmten Teile der Schicht (10) zu verfestigen, während zeitabhängig variierende andere Teile der Flüssigkeitskontaktseite der flexiblen Schicht (8; 108) von den anderen, bereits verfestigten Teilen der Schicht (10) getrennt werden.

3. Verfahren nach Anspruch 2, bei dem die Konstruktionsform (6) eine Führungseinrichtung (81; 85; 87) aufweist und bei dem die Führungseinrichtung in Druckkontakt mit der Seite der flexiblen Schicht (8; 108) gebracht wird, die der Flüssigkeitskontaktseite gegenüberliegt, um die zeitabhängig variierenden Kontaktteile der Flüssigkeitskontaktseite der flexiblen Schicht zu definieren.

4. Verfahren nach Anspruch 3, bei dem der Druckkontakt durch Verschieben der Führungseinrichtung (81) entlang der gegenüberliegenden Seite der flexiblen Schicht (8) realisiert wird.

5. Verfahren nach Anspruch 3, bei dem der Druckkontakt durch Rollen der Führungseinrichtung (85; 87) entlang der gegenüberliegenden Seite der flexiblen Schicht (108) realisiert wird.

6. Verfahren nach Anspruch 5, bei dem das Rollen der Führungseinrichtung (85) mindestens realisiert wird, indem die flexible Schicht (108) in einer geschlossenen Schleife um mindestens zwei Rollen (85) gerollt wird.

7. Verfahren nach Anspruch 5, bei dem das Rollen der Führungseinrichtung (87) mindestens realisiert wird, indem die flexible Schicht (108) mittels eines Aufwickel-und Abwickelmechanismus (88) aufgewickelt und abgewickelt wird.

8. Verfahren nach Anspruch 1, bei dem das gleichzeitige Stattfinden des Verfestigens und des Trennens realisiert wird, indem eine relative Rotationsbewegung zwischen der Konstruktionsform (206; 306) und dem sich in Konstruktion befindlichen Objekt (5) durchgeführt wird.

9. System zur lagenweisen Herstellung eines konkreten Objekts (5), wobei das System aufweist:
einen Flüssigkeitsbehälter (2), der darin eine Flüssigkeit (3) enthält;
eine Konstruktionsform (6; 206; 306), um mit der Flüssigkeit in dem Flüssigkeitsbehälter Kontakt zu haben;
eine Verfestigungseinrichtung (9), um ein vorbestimmtes Gebiet von einer Schicht (10) der Flüssigkeit (3) zu verfestigen, wobei die Flüssigkeitsschicht (10) an die Konstruktionsform angrenzt, um so eine feste Schicht (14; 214; 314) des konkreten Objekts (5) zu erhalten, wobei die feste Schicht **dadurch** eine vorbestimmte Form hat;
eine Trenneinrichtung (8, 80, 81; 108, 85; 108, 87; 275; 375), um die feste Schicht von der Konstruktionsform zu trennen;
eine Bewegungseinrichtung (21), um die getrennte feste Schicht und die Konstruktionsform relativ zueinander in eine vorbestimmte Position relativ zueinander zu bewegen, um auf ähnliche Weise ein vorbestimmtes Gebiet von einer nachfolgenden solchen Flüssigkeitsschicht zu verfestigen, die Flüssigkeit (3) enthält, die zwischen die getrennte feste Schicht (14; 214; 314) und die Konstruktionsform (6; 206; 306) einströmt, um so eine nachfolgende solche feste Schicht zu erhalten, die an der festen Schicht anhaftet;
**dadurch gekennzeichnet, dass**
das System ausgestaltet ist, um das Verfestigen und das Trennen so durchzuführen, dass das Verfestigen bestimmter Teile der Schicht (14; 214; 314) gleichzeitig mit dem Trennen von anderen, bereits verfestigten Teilen der Schicht stattfindet.

10. System nach Anspruch 9, bei dem die Konstruktionsform eine flexible Schicht (8; 108) mit einer Flüssigkeitskontaktseite aufweist, um mit der Flüssigkeit (3) in dem Flüssigkeitsbehälter (2) Kontakt zu haben, und wobei die Konstruktionsform (6) ausgestaltet ist, um bei Betrieb die flexible Schicht so zu biegen, dass zeitabhängig variierende Kontaktteile der Flüssigkeitskontaktseite der flexiblen Schicht (8; 108) mit der Flüssigkeitsschicht (10) Kontakt haben, um die bestimmten Teile der Schicht (10) zu verfestigen, während zeitabhängig variierende andere Teile der Flüssigkeitskontaktseite der flexiblen Schicht (8; 108) von den anderen, bereits verfestigten Teilen der Schicht (10) getrennt werden.

11. System nach Anspruch 10, bei dem die Konstruktionsform (6) eine Führungseinrichtung (81; 85; 87) aufweist, die ausgestaltet ist, um mit einer Seite der flexiblen Schicht (8; 108), die der Flüssigkeitskontaktseite gegenüberliegt, Druckkontakt zu haben, um die zeitabhängig variierenden Kontaktteile der Flüssigkeitskontaktseite der flexiblen Schicht zu definieren.

12. System nach Anspruch 11, bei dem die Führungseinrichtung ausgestaltet ist, um den Druckkontakt durch Verschieben der Führungseinrichtung (81) entlang der gegenüberliegenden Seite der flexiblen Schicht (8) zu realisieren.

13. System nach Anspruch 11, bei dem die Führungseinrichtung ausgestaltet ist, um den Druckkontakt durch Rollen der Führungseinrichtung (85; 87) entlang der gegenüberliegenden Seite der flexiblen Schicht (108) zu realisieren.

14. System nach Anspruch 13, bei dem das Rollen der Führungseinrichtung (85) mindestens realisiert wird, indem die flexible Schicht (108) in einer geschlossenen Schleife um mindestens zwei Rollen (85) rollbar ist.

15. System nach Anspruch 13, bei dem das Rollen der Führungseinrichtung (87) mindestens mit Hilfe eines Aufwickel-und Abwickelmechanismus (88) für die flexible Schicht (108) realisiert wird.

## Revendications

1. Procédé de production par couches d'un objet tangible (5), ledit procédé comprenant les étapes consistant à :
fournir un réservoir de liquide (2) contenant un liquide (3) ;
fournir une forme de construction (6 ; 206 ; 306) ; et
exécuter de manière répétée des cycles de procédé comprenant chacun les étapes consistant à :
- solidifier une zone prédéterminée d'une couche (10) du liquide (3) lorsque ladite couche de liquide (10) jouxte la forme de construction de façon à obtenir une couche solide (14 ; 214 ; 314) de l'objet tangible (5), la couche solide ayant ainsi une forme prédéterminée ;
- séparer ladite couche solide de ladite forme de construction ; et
- déplacer, l'une par rapport à l'autre, la couche solide séparée et la forme de construction jusqu'à une position relative prédéterminée pour exécuter un cycle de procédé consécutif de ce type afin de solidifier de manière similaire une zone prédéterminée d'une telle couche consécutive de liquide contenant du liquide (3) pénétrant entre la couche solide séparée (14 ; 214 ; 314) et la forme de construction (6 ; 206 ; 306), de manière à obtenir une couche solide consécutive de ce type adhérant à la couche solide ;
**caractérisé en ce que**
pour au moins un desdits cycles de procédé, ladite solidification et ladite séparation sont effectuées de manière que la solidification de certaines parties de la couche (14 ; 214 ; 314) s'effectue en même temps que la séparation d'autres parties, déjà solidifiées, de ladite couche.

2. Procédé selon la revendication 1, **caractérisé en ce que** la forme de construction comprend une couche flexible (8 ; 108) présentant une face de contact avec le liquide et **en ce que** l'exécution simultanée de la solidification et de la séparation est obtenue grâce au fait que ladite face de contact avec le liquide est mise en contact avec le liquide (3) dans le réservoir de liquide (2) et **en ce que** la couche flexible est cintrée de telle sorte que les parties de contact, qui varient avec le temps, de la face en contact avec le liquide de la couche flexible (8 ; 108) sont en contact avec la couche liquide (10) pour solidifier lesdites certaines parties de la couche (10), pendant que d'autres parties, qui varient avec le temps, de la face de contact avec le liquide de la couche flexible (8 ; 108) ont été séparées desdites autres parties, déjà solidifiées, de la couche (10).

3. Procédé selon la revendication 2, **caractérisé en ce que** la forme de construction (6) comprend des moyens de guidage (81 ; 85 ; 87) et **en ce que** les moyens de guidage sont plaqués contre la face de la couche flexible (8 ; 108) opposée à la face de contact avec le liquide pour définir les parties de contact, qui varient avec le temps, de la face de contact avec le liquide de la couche flexible.

4. Procédé selon la revendication 3, **caractérisé en ce que** le plaquage est obtenu en faisant coulisser les moyens de guidage (81) le long de ladite face opposée de la couche flexible (8).

5. Procédé selon la revendication 3, **caractérisé en ce que** ledit plaquage est obtenu en faisant rouler les moyens de guidage (85 ; 87) le long de ladite face opposée de la couche flexible (108).

6. Procédé selon la revendication 5, **caractérisé en ce que** ledit roulement des moyens de guidage (85) est obtenu au moins grâce au fait que la couche flexible (108) tourne en boucle fermée autour d'au moins deux galets (85).

7. Procédé selon la revendication 5, **caractérisé en ce que** ledit roulement des moyens de guidage (87) est obtenu au moins grâce au fait que la couche flexible (108) est enroulée et réenroulée au moyen d'un mécanisme d'enroulement et de réenroulement (88).

8. Procédé selon la revendication 1, **caractérisé en ce que** l'exécution simultanée de la solidification et de la séparation résulte d'un mouvement de rotation relatif entre la forme de construction (206 ; 306) et l'objet (5) en construction.

9. Système de production par couches d'un objet tangible (5), le système comprenant :
un réservoir de liquide (2) destiné à contenir un liquide (3) ;
une forme de construction (6 ; 206 ; 306) destinée à être en contact avec le liquide dans le réservoir de liquide ;
des moyens de solidification (9) pour solidifier une zone prédéterminée d'une couche (10) du liquide (3), la dite couche de liquide (10) jouxtant la forme de construction, de façon à obtenir une couche solide (14 ; 214 ; 314) de l'objet tangible (5), la couche solide ayant ainsi une forme prédéterminée ;
des moyens de séparation (8, 80, 81 ; 108, 85 ; 108, 87 ; 275 ; 375) pour séparer ladite couche solide de ladite forme de construction,
des moyens de déplacement (21) pour déplacer, l'une par rapport à l'autre, la couche solide séparée et la forme de construction jusqu'à une position relative prédéterminée afin de solidifier de manière similaire une zone prédéterminée d'une couche de liquide consécutive de ce type contenant du liquide (3) pénétrant entre la couche solide séparée (14 ; 214 ; 314) et la forme de construction (6 ; 206 ; 306), de manière à obtenir une couche solide consécutive de ce type adhérant à la couche solide ;
**caractérisé en ce que**
le système est agencé pour effectuer ladite solidification et ladite séparation de manière que la solidification de certaines parties de la couche (14 ; 214 ; 314) se déroule en même temps que la séparation d'autres parties, déjà solidifiées, de la couche.

10. Système selon la revendication 9, **caractérisé en ce que** la forme de construction comprend une couche flexible (8 ; 108) ayant une face de contact avec le liquide destinée à être en contact avec le liquide (3) dans le réservoir de liquide (2) et **en ce que** la forme de construction (6) est agencée pour cintrer, en fonctionnement, la couche flexible de manière que des parties de contact, qui varient avec le temps, de la face de contact avec le liquide de la couche flexible (8 ; 108) soient en contact avec la couche de liquide (10) pour solidifier lesdites certaines parties de la couche (10), alors que d'autres parties, qui varient avec le temps, de la face de contact avec le liquide de la couche flexible (8 ; 108) ont été séparées desdites autres parties, déjà solidifiées, de la couche (10).

11. Système selon la revendication 10, **caractérisé en ce que** la forme de construction (6) comprend des moyens de guidage (81 ; 85 ; 87) agencés pour être plaqués contre une face de la couche flexible (8 ; 108) opposée à la face de contact avec le liquide afin de définir les parties de contact, qui varient avec le temps, de la face de contact avec le liquide de la couche flexible.

12. Système selon la revendication 11, **caractérisé en ce que** les moyens de guidage sont agencés pour assurer ledit plaquage par coulissement desdits moyens de guidage (81) le long de ladite face opposée de la couche flexible (8).

13. Système selon la revendication 11, **caractérisé en ce que** les moyens de guidage sont agencés pour assurer ledit plaquage par roulement desdits moyens de guidage (85 ; 87) le long de ladite face opposée de la couche flexible (108).

14. Système selon la revendication 13, **caractérisé en ce que** ledit roulement des moyens de guidage (85) est assuré au moins grâce au fait que la couche flexible (108) peut tourner en boucle fermée autour d'au moins deux galets (85).

15. Système selon la revendication 13, **caractérisé en ce que** ledit roulement des moyens de guidage (87) est assuré au moins par un mécanisme d'enroulement et de réenroulement (88) de la couche flexible (108).
